# EUROPEAN PATENT SPECIFICATION

(11) **EP 2 647 509 B1**
(45) Date of publication and mention of the grant of the patent: **12.04.2017**
(21) Application number: 11845594.8
(22) Date of filing: 15.11.2011
(51) Int. Cl.: B60C 13/00

(54) **TIRE**
REIFEN
PNEUMATIQUE

(30) Priority: 30.11.2010 JP 2010266904
(43) Date of publication of application: 09.10.2013
(73) Proprietor: Bridgestone Corporation, Tokyo 104-8340 (JP)
(72) Inventor: ITOI, Dyta, Kodaira-shi Tokyo 187-8531 (JP); HAYASHI, Kazuo, Kodaira-shi Tokyo 187-8531 (JP)
(74) Representative: Lamb, Martin John Carstairs
(86) International application number: PCT/JP2011/006363
(87) International publication number: WO 2012/073436

(56) References cited:
- EP-A1- 1 625 952
- DE-A1- 19 640 834
- JP-A- 7 258 981
- JP-A- 10 329 512
- JP-A- 2003 118 297
- JP-A- 2004 345 471
- JP-A- 2005 008 107
- JP-A- 2005 008 107
- JP-A- 2008 195 132
- JP-A- 2009 240 280
- US-A- 5 364 688
- US-A1- 2010 170 598

## Description

### TECHNICAL FIELD

The present invention relates to a pneumatic/solid tire having a marking formed on an outer surface of a side portion thereof by printing. Specifically, the present invention proposes a technique for maintaining good visibility of a marking for a long period by effectively preventing the marking as a printed layer from being cracked and/or coming off during use of the tire.

### BACKGROUND ART

It has been widely practiced to indicate manufacturer name, brand name, tire size, the date of manufacture and the like by, for example, providing an outer surface of a side portion including a sidewall portion and a bead portion of a tire with markings constituted of characters, geometrical figures, symbols including a bar code, patterns and the like.
Such markings as described above are generally formed, for example, by solid printing, provision of colored rubber, painting, attaching a seal, and the like.
Attention is drawn to the disclosures of DE19640834, EP1625952, JP2005-008107.

### SUMMARY OF THE INVENTION

### Technical Problems

When a pneumatic/solid tire is rotated under load exerted thereon, a ground-contact surface of a tread is elastically deformed by ground-contact pressure from a road surface and thus a sidewall portion and a bead portion of the tire are also elastically deformed. Every time a sidewall portion and the like experience such elastic deformation as described above, tensile deformation and compressive deformation repeatedly occur in an outer surface of a side portion including the sidewall portion and the bead portion, whereby, in a case where a marking is formed on an outer surface of the side portion of the tire by such a conventional method as described above, there is a possibility that the marking itself is deformed to cause the marking as a printed layer to be wrinkled and/or cracked and the printed layer to eventually come off from the outer surface of the side portion. That is, there arises a problem in that visibility of the marking provided in the pneumatic/solid tire deteriorates and the marking cannot fully demonstrate predetermined information transmission capability thereof for a long period.

The present invention aims at solving such a problem of the prior art as described above and an object thereof is to provide a pneumatic/solid tire allowing a marking formed on an outer surface of a side portion thereof to fully demonstrate good visibility for a long period by effectively preventing the marking being cracked and a marking portion from coming off when the tire experiences elastic deformation of the side portion including a sidewall portion and a bead portion and resulting tensile and compressive deformations occurring at the outer surface of the side portion.

### Solution to the Problems

The tire of the present invention, which may be either a pneumatic tire or a solid tire, comprises at an outer surface of a side portion thereof a marking formed by printing plural dots on the outer surface of the side portion, wherein the dots have: the same contour configurations and/or optionally similar contour configurations, which are mutually independent; and color(s) different from the base color of the outer surface of the side portion, and the upper limit of width of the smallest gap portion having the base color and formed between the largest dot units is 10% of the length of the shortest portion of the largest dot unit.
It should be noted that in the present invention the term "the same contour configurations" may represent geometrically similar contour configurations, as well as geometrically the same contour configurations.

It is preferable in the present invention that tint of color of a marking is adjusted by changing size and/or density of printed dots of at least a portion of the marking.

Further, it is preferable that at least one of hue and saturation of color of the dots is changed in at least a portion of the marking.

Yet further, it is preferable that the dots have polygonal contour configurations and the marking is constituted of: the dots; and gap portions formed between the dots and having the base color of the outer surface of the side portion.

Yet further, it is preferable that either a surface area of each dot does not exceed 50 mm² or ratio of length of the shortest portion with respect to length of the longest portion of the largest dot unit is at least 1/2.

### [DELETED]

It is preferable in the present invention that, when at least a portion of the marking is constituted of a character, the character has width of at least 5 mm and height of at least 8 mm.

### Advantageous Effect of the Invention

According to the tire of the present invention, a marking is provided at an outer surface of a side portion of the tire by printing plural dots having the same contour configurations (and optionally similar contour configurations, as well) which are mutually independent, with ink of a color different from the base color of the outer surface of the side portion, on the outer surface. As a result, the marking, constituted of the plural dots thus printed and gap portions having the base color of the outer surface of the side portion and formed between the dots, can demonstrate satisfactorily good visibility. Further, a magnitude of elongation of each dot due to compressive and tensile deformations at the outer surface of the side portion can be suppressed at a satisfactorily low level because: the dots constituting the marking exist in a mutually independent manner at the outer surface of the side portion, whereby a significantly large portion of compressive and tensile deformations occurring at the outer surface of the side portion when the tire is rotated under load exerted thereon is absorbed by the gap portions lacking ink between these dots; and each dot has a satisfactorily small printed area. It is therefore possible in the present invention to effectively prevent the marking being wrinkled and/or cracked and a marking portion from coming off from the outer surface of the side portion during use of the tire, so that satisfactorily good visibility of the marking can be maintained for a long period.

Tint of color of the marking can be adjusted through only two states of the dots, i.e. largeness/smallness or presence/absence of dots, by changing size and/or density of the dots of at least a portion of the marking in the present invention. The marking can be imparted with gradation by changing tint of color, in particular, when size and/or density of the dots is gradually changed in a given direction of the marking. Desired visibility can be very easily imparted to the marking formed by printing on the tire accordingly.

Further, partial change in hue and saturation of color of the marking itself can be easily realized by changing at least one of hue and saturation of color of at least a portion of the marking in the present invention. That is, the marking can be imparted with gradation by changing hue and/or saturation of color, in particular, by gradually changing hue and/or saturation of color of the dots in a given direction of the marking. Visibility of the marking can be easily and more effectively enhanced accordingly.

In a case where the printed dots have polygonal contour configurations and the marking is constituted of these polygonal dots and gap portions having the base color of the outer surface of the side portion formed between the dots, an absolute magnitude of elastic deformation experienced by printed portions of the marking thus divided by the gap portions having the base color is significantly lower than an absolute magnitude of elastic deformation which would be experienced by solid-printed portions of the conventional marking when the printed portions are deformed due to elastic deformation of the sidewall portion and the like, whereby the marking constituted of the polygonal dots and the gap portions associated therewith is less susceptible to deformation of the tire. As a result, generation of wrinkles, cracks and eventual coming-off of the marking portion as the printed portions can be more effectively prevented than otherwise. Further, the proportion of the gap portions having the base color can be uniformly reduced all across the marking in this case, so that visibility of the marking is further enhanced.

In a case where surface area of each dot is adapted not to exceed 50 mm² in the tire as described above, it is possible to sufficiently reduce risks of crack generation and the like at the printed dots and maintain good visibility of the marking for a long period even if the marking itself experiences deformations.

Further, in a case where ratio of length of the shortest portion with respect to length of the longest portion of the largest dot unit is set to be at least 1/2, for example, in a case where the dot units have either square contour configurations or rectangular contour configurations in which ratio of length of a short side as the shortest portion with respect to diagonal length as the longest portion of the rectangular dot unit is at least 1/2, it is possible to advantageously suppress excessive increase in area of the gap portions of the base color and thus well address a request to enhance visibility of the marking, by increasing the total area of the printed dot portions with the minimum increase in area of the gap portions of the base color.
In other words, if the aforementioned ratio is less than 1/2, the area of the gap portions of the base color extending in the longitudinal direction of the longest portion of the dot is too large and visibility of the marking may deteriorate.

In a case where width of the smallest gap portion of the base color formed between the dots is set not to exceed 10% of the length of the shortest portion of the largest dot unit, it is possible to decrease a degree of exposure of the base color (which is generally black) of the outer surface of the side portion and enhance brightness of the marking, thereby improving visibility.

In a case where at least a portion of the marking is constituted of a character having width of 5 mm or wider and height of 8 mm or higher, it is possible to make the marking formed by the printed dots demonstrate satisfactorily good visibility.
In other words, if each of characters constituting the marking has width narrower than 5 mm and height lower than 8 mm, the characters are too small, rendering formation of the marking by dot printing unnecessary and rather causing concern that dot printing may fail to satisfactorily achieve desired visibility in such a small marking.
The upper limits of width and height of each of characters constituting the marking are to be determined according a range of a space to be provided with the marking, which space varies depending on type and size of the tire to which the present invention is applied. Preferable upper limits of width and height of each of characters constituting the marking are therefore not particularly specified.

### BRIEF DESCRIPTION OF THE DRAWINGS

FIG. 1 is a side view of the tire according to one embodiment of the present invention.
FIG. 2 is a side view of the tire according to another embodiment of the present invention.
FIG. 3A and FIG. 3B are views each showing a marking formed by printing dots having triangular contour configurations.
FIG. 4A and FIG. 4B are views each showing a marking formed by printing dots having quadrilateral contour configurations.
FIG. 5 is a view showing a marking formed by printing dots having another type of contour configurations.

### DESCRIPTION OF THE EMBODIMENTS

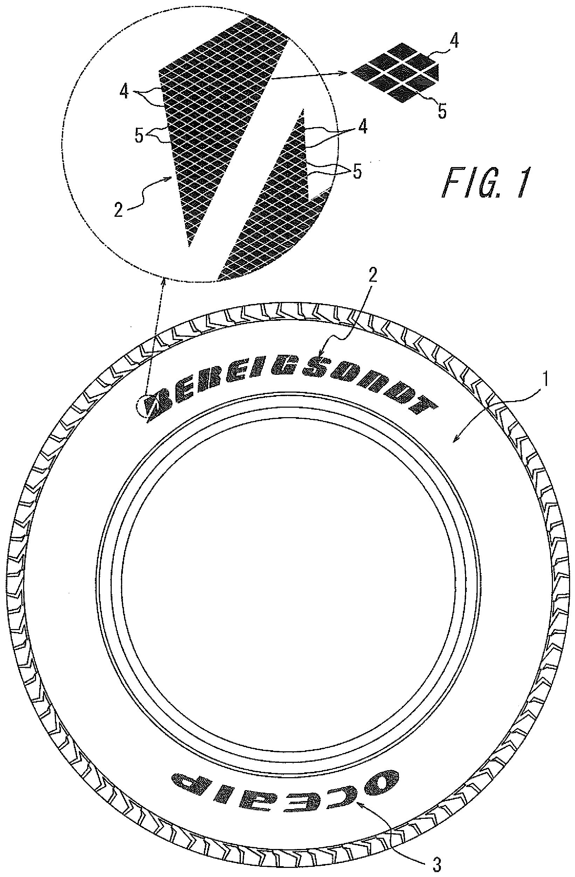

An embodiment of the present invention will be described hereinafter with reference to the drawings.
Reference number 1 represents an outer surface of a side portion including a sidewall portion and a bead portion of a pneumatic tire in the embodiment shown in FIG. 1. The pneumatic tire of the present embodiment has at the outer surface 1 of the side portion thereof plural markings 2, 3 for indicating manufacture name, brand name and the like constituted of character rows along the tire circumferential direction.
Examples of the marking to be provided with the outer surface 1 of the side portion include, although not shown, geometric figures, symbols, patterns and combinations thereof, as well as characters as shown in FIG. 1. The outer surface 1 of the side portion may be provided with a marking for indicating tire size or the like.

The markings 2, 3 are formed by printing to include: portions having the base color (white in the example of FIG. 1) of the outer surface 1 of the side portion; and printed portions having color(s) different from the base color, which portions are black dot portions in the example of FIG. 1, as shown in a partially enlarged view of the marking 2 in a circle of FIG. 1.
Specifically, the markings 2, 3 in the tire shown in FIG. 1 are each constituted of plural dots 4 having the same and mutually independent contour configurations (e.g. quadrilateral contour configurations like a rhombus as shown in FIG. 1) and lattice-like gap portions 5 exposed outside between adjacent dots 4 and having the base color (white in the example of FIG. 1) of the outer surface 1 of the side portion, the dots 4 and the gap portions 5 being provided at the outer surface of the side portion.

In a case where the markings 2, 3 of the tire are formed as described above, a significantly large portion of compressive and tensile deformations occurring at the outer surface 1 of the side portion when the tire is rotated under load exerted thereon is absorbed by the lattice-like gap portions 5 of the base color, i.e. the gap portions lacing ink between the dots 4, which dots are mutually independent and constitute a portion of the markings 2, 3. Accordingly, a magnitude of elongation of each printed dot 4 itself due to compressive and tensile deformations at the outer surface 1 of the side portion can be suppressed at a very low level. As a result, it is possible to effectively prevent the dots 4 and thus the markings 2, 3 formed by clustered dots 4 from being winkled and/or cracked and a marking portion where the dots 4 have been printed to form the markings 2, 3 from coming off from the outer surface 1 of the side portion in the present embodiment, so that good visibility of the markings 2, 3 can be maintained for a long period in a satisfactory manner.

Color of the dots 4 may be selected from any of: chromatic colors such as blue, red, yellow and the like; anchromatic color such as white, black, grey; glossy colors; fluorescent colors; and the like, as long as the color is different from the base color of the outer surface 1 of the side portion. Plural colors selected from the aforementioned examples may be used in an overlapped manner.

The dots 4 having rhombic contour configurations are disposed in an aligned manner to form the lattice-like gap portions 5 of the base color between the dots 4 in the example shown in FIG. 1. Arrangement of the dots 4, however, may be appropriately modified according to necessity and thus the gap portions 5 of the base color exposed outside between the dots 4 may not have a lattice-like structure depending on the dot arrangement.
Further, although the plural dots 4 constituting the markings 2, 3 unanimously have the same size in the example shown in FIG. 1, the sizes of the dots 4 may be appropriately changed according to necessity. More specifically, size and/or density of the dots 4 may be changed at least in a portion of each marking 2, 3.

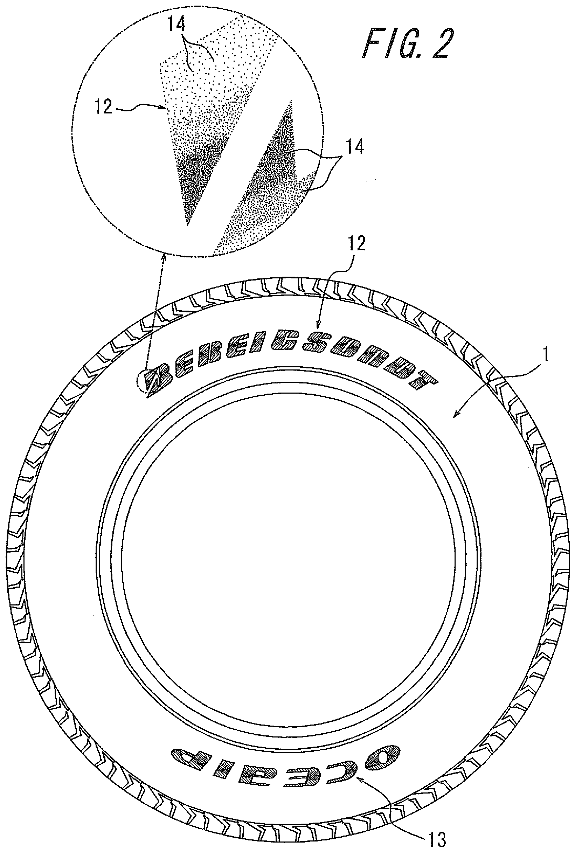

The contour configurations of the dots 4 are not restricted to quadrilateral configurations as shown in FIG. 1 and may take on various configurations. Examples of the contour configurations other than quadrilateral ones of the dots 4 include substantially circular configurations like those of dots 14 forming markings 12, 13 shown in FIG. 2, oval configurations, elongated circle-like configurations, and the like.

In the tire shown in FIG. 2, each of characters constituting a character row along the tire circumferential direction of each marking 12, 13 is imparted with gradation by gradually increasing density of the dots 14 forming the character of the marking 12, 13 from the outer region and/or the inner region toward the center region in the tire radial direction in the character.
This means that tint of color of each marking 12, 13 can be adjusted by changing density of the dots 14 in at least one of characters constituting each marking 12, 13 in the tire as shown in FIG. 2, so that visibility of the markings 12, 13 of the tire can be very easily enhanced.
It should be noted that tint of color of each marking can be adjusted by gradually changing size of the dots in at least one of characters constituting each marking in the tire of the present invention.

The density of the dots 14 may be rapidly increased in at least a portion of each marking 12, 13.
Further, although not shown, hue and/or saturation of color of each marking 12, 13 can be adjusted by changing at least one of hue and saturation of the color of the dots in at least a portion of the marking. In this connection, the marking 12, 13 can be imparted with gradation by changing hue and/or saturation of the color of the dots thereof.

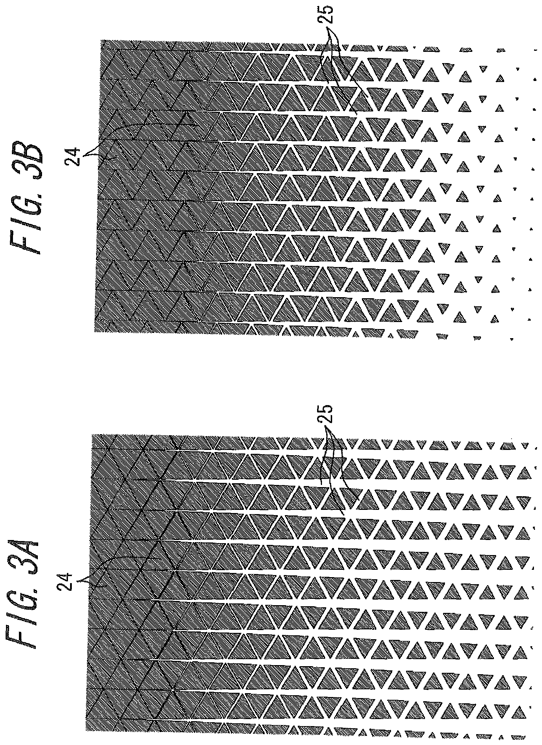

FIG. 3A and FIG. 3B are views each showing an example of a marking including a character or the like formed by printing dots mutually independent and having triangular contour configurations. Each of the markings is imparted with gradation by gradually decreasing, toward the lower portion in FIG. 3A and FIG. 3B, density of the printed plural triangular dots 24 having similar contour configurations. Hatched portions represent printed portions of the dots having a predetermined color and white portions represent gap portions 25 demarcated between the dots 24 to have the base color in FIG. 3A and FIG. 3B.

FIG. 3A shows an example of printing pattern of plural triangular dots in which the gap portions 25 having the base color between the dots 24 are constituted of those extending linearly in the up-down direction and those extending linearly in the diagonally left-right direction, with width dimensions of these gap portions 25 gradually increasing as they extend downward in the drawing. FIG. 3B shows an example of printing pattern of plural triangular dots in which the gap portions 25 having the base color between the printed dots 24 are constituted of those extending linearly in the up-down direction and those extending in a zigzag manner in the diagonally left-right direction to intersect those extending linearly, with width dimensions of these gap portions 25 gradually increasing as they extend downward in the drawing.

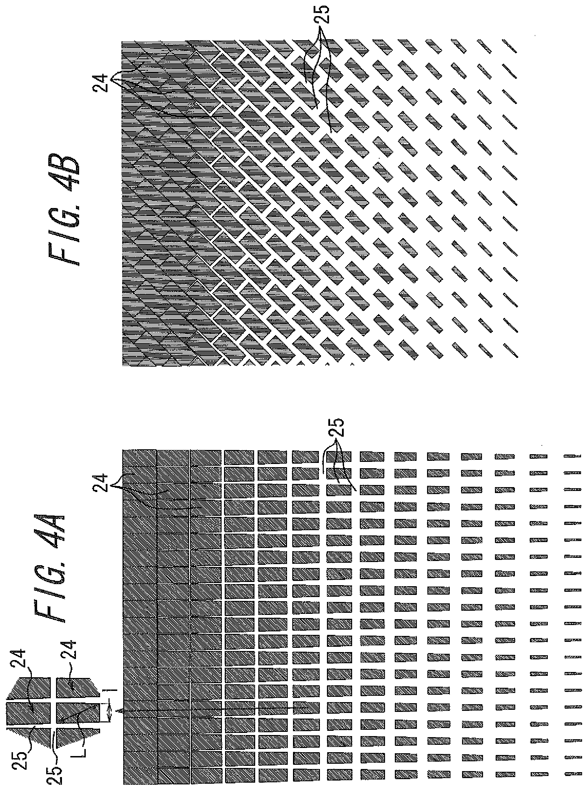

FIG. 4A and FIG. 4B each show an example of printing pattern in which respective printed dots have quadrilateral (rectangular) contour configurations and density of the plural quadrilateral dots 24 thus printed to have the same or similar contour configurations gradually decreases toward the lower end of the drawing.
As in FIG. 3A and FIG. 3B, hatched portions represent printed portions of the dots having a predetermined color and white portions represent gap portions 25 demarcated between the dots 24 to have the base color in FIG. 4A and FIG. 4B.

Specifically, FIG. 4A shows an example of printing pattern of plural quadrilateral dots 24 in which the gap portions 25 having the base color between the dots 24 extend in a lattice-like manner such that those extending linearly in the up-down direction and those extending linearly in the left-right direction intersect one another, with width dimensions of these gap portions 25 gradually increasing as they extend downward in the drawing. FIG. 4B shows an example of printing pattern of plural quadrilateral dots 24 in which the gap portions 25 having the base color between the dots 24 extend in the running bond brick pattern such that the gap portions 25 are constituted of those extending continuously and linearly in a diagonal direction (from the left-hand side bottom toward the right-hand side top in the drawing) between straight dot rows and those extending in a zigzag manner in a diagonal direction (from the right-hand side bottom toward the left-hand side top in the drawing) due to continual blocking by the dot rows, with width dimensions of these gap portions 25 gradually increasing as they extend downward in the drawing.

In the tire of the present invention as described above, it is preferable that the largest surface area of each of the mutually independent dots 4, 14, 24 printed for forming a marking is set to be 50 mm² regardless of the contour configurations of the dots in terms of ensuring desired good visibility with effectively preventing crack generation at surfaces of the printed dots 4, 14, 24 from occurring.

With regard to a request to reduce the gap portions 5, 25 having the base color as best as possible to ensure improvement of visibility of a marking, the request can be met by, as shown in an enlarged view of the quadrilateral dot 24 of FIG. 4A, setting ratio of length **l** of the shortest portion (length of the short side of the rectangular dot 24 in the enlarged view of FIG. 4A) with respect to length L of the longest portion (length of the diagonal line of the rectangular dot 24 in the enlarged view of FIG. 4A) to be at least 1/2. Unnecessary increase in the gap portions 25 having the base color can be maximally suppressed by this arrangement.

In a case where mutually independent plural dot units have the same contour configurations (and optionally similar contour configurations, as well) as shown in FIG. 4A, every quadrilateral dot 24 is to satisfy the aforementioned requirement of 1/L ≥ 1/2.

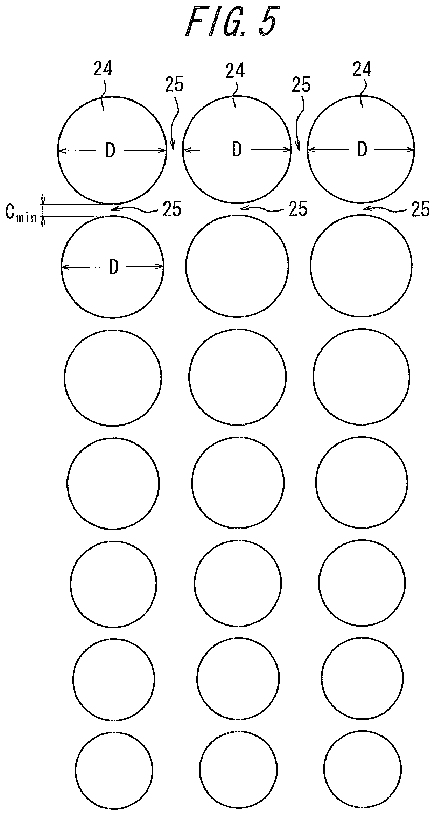

Regarding the gap portions 25 having the base color formed between the dots 24, in particular, the largest dot units, the upper limit of width of the smallest gap portion Cₘᵢₙ having the base color between the largest dot units 24 is 10% of the length of the shortest portion of the largest dot unit (see FIG. 5). It should be noted that lengths of the shortest portion and the longest portion are the same and equal to the circular diameter D when the dots 24 have circular contour configurations as shown in FIG. 5.

In a case where at least a portion of a marking is constituted of a character as in the tires shown in FIG. 1 and FIG. 2, the character preferably has width of at least 5 mm and height of at least 8 mm in terms of enhancing visibility of the character formed by printing dots.

### Example

There will be described hereinafter test results of: visibility of markings formed by printing at outer surfaces of side portions of Example tires, a Reference Example tire (which is not according to the present invention) and Conventional tire; and presence/absence of crack generation in printed dot portions of Example tires and Conventional tire.
Example tires and a Reference Example tire each had a marking formed by printing, on an outer surface of a side portion of the tire, plural mutually independent dots having the same contour configurations (and optionally similar contour configurations, as well) and a color different from the base color of the outer surface of the side portion. Conventional tire had a marking formed thereon by what is called solid printing. Specifically, Example tire 1 had a marking formed by dots having triangular contour configurations, of which size is changed as shown in FIG. 3A. On the other hand, the largest surface area of dot unit was changed as a parameter between Example tires 2 to 4. The aforementioned ratio of 1/L was changed as a parameter between Example tires 5 to 7. The upper limit of width of the smallest gap portion Cₘᵢₙ having the base color described in connection with FIG. 5 was changed as a parameter between Example tires 8 and 9 and Reference Example tire 10.
Visibility of each of the marking was evaluated through sensory evaluation by 50 persons, which evaluation includes: making each person evaluate visibility of the marking by a score according to predetermined criteria (100 points for good legibility, 50 points for being somehow legible, and 0 point for non-legibility); calculating the average of the scores of 50 persons; and converting the average to an index value relative to the control score being 100.
Presence/absence of crack generation was evaluated by: preparing a predetermined number (10 in the present Examples) of test tires for each of Example, Reference Example and Control tires; subjecting the test tires to a running test (10,000 km) to count the number of the test tires which eventually experienced crack generation; calculating proportion of the crack-generated test tires for the total number of the test tires; and regarding the proportion thus calculated as "crack occurrence rate" of the Example/Reference Example/Control tire.
The results thus obtained, as well as the relevant characteristics, of Example tires, Reference Example tire and Control tire are shown in Table 1.

**[Table 1]**

| | Largest surface area (mm²) | Smallest surface area (mm²) | Ratio 1/L | Smallest gap (%) | Visibility (relative to CTRL) | Crack occurrence rate (%) |
|---|---|---|---|---|---|---|
| Conventional tire | No setting of dots due to solid printing | | | | 100 | 43% |
| Example 1 tire | 50 | 5 | 3/4 | 8% | 90 | 0% |
| Example 2 tire | 55 | 55 | 3/4 | 8% | 95 | 25% |
| Example 3 tire | 50 | 50 | 3/4 | 8% | 92 | 0% |
| Example 4 tire | 45 | 45 | 3/4 | 8% | 90 | 0% |
| Example 5 tire | 50 | 50 | 1/3 | 8% | 92 | 22% |
| Example 6 tire | 50 | 50 | 1/2 | 8% | 92 | 0% |
| Example 7 tire | 50 | 50 | 3/4 | 8% | 92 | 0% |
| Example 8 tire | 50 | 50 | 3/4 | 8% | 92 | 0% |
| Example 9 tire | 50 | 50 | 3/4 | 10% | 90 | 0% |
| Reference Example 10 tire | 50 | 50 | 3/4 | 12% | 75 | 0% |

It is understood from the results shown in Table 1 that Example tire 2 having the largest surface area of dot of 50 mm² exhibited significantly high crack generation ratio and Reference Example tire 10 having the smallest gap exceeding 10% of the length of the shortest portion of the largest dot unit exhibited significant deterioration of visibility.

### REFERENCE SIGNS LIST

- 1: Outer surface of side portion
- 2, 3, 12, 13: Marking
- 4, 14, 24: Dot
- 5, 25: Gap portion having base color

## Claims

1. A tire, comprising at an outer surface (1) of a side portion thereof a marking (2, 3, 12, 13) formed by printing plural dots (4, 14, 24) on the outer surface (1) of the side portion, wherein the dots (4, 14, 24) have:
the same contour configurations and/or optionally similar contour configurations, which are mutually independent;
color(s) different from the base color of the outer surface (1) of the side portion, and **characterized in that**
the upper limit of width (Cₘᵢₙ) of the smallest gap portion (5, 25) having the base color and formed between the largest dot units (4, 14, 24) is 10% of the length of the shortest portion of the largest dot unit (4, 14, 24).

2. The tire of claim 1, wherein tint of color of a marking is adjusted by changing size of printed dots (24) of at least a portion of the marking.

3. The tire of claim 1, wherein tint of color of a marking (12, 13) is adjusted by changing density of printed dots (14, 24) of at least a portion of the marking (12, 13).

4. The tire of any of claims 1 to 3, wherein at least one of hue and saturation of color of the dots is changed in at least a portion of the marking.

5. The tire of claim 1, wherein the dots have polygonal contour configurations and the marking is constituted of the dots and gap portions formed between the dots and having the base color of the outer surface of the side portion.

6. The tire of any of claims 1 to 5, wherein a surface area of each dot (4, 14, 24) does not exceed 50 mm².

7. The tire of any of claims 1 to 6, wherein ratio of length (1) of the shortest portion with respect to length (L) of the longest portion of the largest dot unit (4, 14, 24) is at least 1/2.

8. The tire of any of claims 1 to 7, wherein at least a portion of the marking (4, 14) is constituted of a character and the character has width of at least 5 mm and height of at least 8 mm.

## Patentansprüche

1. Reifen, der an einer Außenfläche (1) eines Seitenabschnitts desselben eine Markierung (2, 3, 12, 13) umfasst, die durch das Drucken mehrerer Flecke (4, 14, 24) auf der Außenfläche (1) des Seitenabschnitts geformt ist, wobei die Flecke (4, 14, 24) Folgendes aufweisen:
die gleichen Umrisskonfigurationen und/oder wahlweise ähnliche Umrisskonfigurationen, die wechselseitig unabhängig sind,
Farbe(n), die sich von der Grundfarbe der Außenfläche (1) des Seitenabschnitts unterscheidet/unterscheiden, und **dadurch gekennzeichnet, dass**
die Obergrenze der Breite (Cₘᵢₙ) des kleinsten Lückenabschnitts (5, 25), der die Grundfarbe aufweist und zwischen den größten Fleckeinheiten (4, 14, 24) geformt ist, 10 % der Länge des kürzesten Abschnitts der größten Fleckeinheit (4, 14, 24) beträgt.

2. Reifen nach Anspruch 1, wobei eine Farbtönung einer Markierung eingestellt wird durch das Verändern einer Größe gedruckter Flecke (24) wenigstens eines Abschnitts der Markierung.

3. Reifen nach Anspruch 1, wobei eine Farbtönung einer Markierung (12, 13) eingestellt wird durch das Verändern einer Dichte gedruckter Flecke (14, 24) wenigstens eines Abschnitts der Markierung (12, 13).

4. Reifen nach einem der Ansprüche 1 bis 3, wobei wenigstens eines von Farbton und Farbsättigung der Flecke in wenigstens einem Abschnitt der Markierung verändert wird.

5. Reifen nach Anspruch 1, wobei die Flecke vieleckige Umrisskonfigurationen aufweisen und die Markierung aus den Flecken und Lückenabschnitten ,die zwischen den Flecken geformt sind und die Grundfarbe der Außenfläche des Seitenabschnitts aufweisen, besteht.

6. Reifen nach einem der Ansprüche 1 bis 5, wobei eine Oberfläche jedes Fleckes (4, 14, 24) 50 mm² nicht überschreitet.

7. Reifen nach einem der Ansprüche 1 bis 6, wobei ein Verhältnis der Länge (1) des kürzesten Abschnitts in Bezug auf die Länge (L) des längsten Abschnitts der größten Fleckeinheit (4, 14, 24) wenigstens 1/2 beträgt.

8. Reifen nach einem der Ansprüche 1 bis 7, wobei wenigstens ein Abschnitt der Markierung (4, 14) aus einem Zeichen besteht und das Zeichen eine Breite von wenigstens 5 mm und eine Höhe von wenigstens 8 mm aufweist.

## Revendications

1. Bandage pneumatique, comprenant au niveau d'une surface externe (1) de sa partie latérale un marquage (2, 3, 12, 13) formé par impression de plusieurs points (4, 14, 24) sur la surface externe (1) de la partie latérale, dans lequel les points (4, 14, 24) présentent :
la même configuration de contour et/ou optionnellement des configurations de contour similaires, mutuellement indépendantes ;
une (des) couleurs(s) différente(s) de la couleur de base de la surface externe (1) de la partie latérale, et **caractérisé en ce que** :
la limite supérieure de la largeur (Cₘᵢₙ) de la partie d'espace la plus petite (5, 25) présentant la couleur de base et formée entre les unités de point les plus grandes (4, 14, 24) représente 10% de la longueur de la partie la plus courte de l'unité de point la plus grande (4, 14, 24).

2. Bandage pneumatique selon la revendication 1, dans lequel une teinte de la couleur d'un marquage est ajustée en changeant une taille des points imprimés (24) d'au moins une partie du marquage.

3. Bandage pneumatique selon la revendication 1, dans lequel une teinte de la couleur d'un marquage (12, 13) est ajustée en changeant une densité des points imprimés (14, 24) d'au moins une partie du marquage (12, 13).

4. Bandage pneumatique selon l'une quelconque des revendications 1 à 3, dans lequel au moins une caractéristique, la tonalité ou la saturation de la couleur des points, est changée dans au moins une partie du marquage.

5. Bandage pneumatique selon la revendication 1, dans lequel les points ont des configurations de contour polygonales, le marquage étant constitué par des points et des parties d'espace formées entre les points et présentant la couleur de base de la surface externe de la partie latérale.

6. Bandage pneumatique selon l'une quelconque des revendications 1 à 5, dans lequel une aire de surface de chaque point (4, 14, 24) ne dépasse pas 50 mm².

7. Bandage pneumatique selon l'une quelconque des revendications 1 à 6, dans lequel un rapport entre la longueur (1) de la partie la plus courte et la longueur (L) de la partie la plus longue de l'unité de point la plus grande (4, 14, 24) correspond au moins à ½.

8. Bandage pneumatique selon l'une quelconque des revendications 1 à 7, dans lequel au moins une partie du marquage (4, 14) est constituée par un caractère, le caractère ayant une largeur d'au moins 5 mm et une hauteur d'au moins 8 mm.
